# EUROPEAN PATENT SPECIFICATION

(11) **EP 3 922 539 B1**
(45) Date of publication and mention of the grant of the patent: **27.11.2024**
(21) Application number: 21173047.8
(22) Date of filing: 10.05.2021
(51) Int. Cl.: B62J 1/10, B62J 1/00

(54) **SADDLE**
SATTEL
SELLE

(30) Priority: 09.06.2020 IT 202000013684
(43) Date of publication of application: 15.12.2021
(73) Proprietor: OSCA S.r.l., 40121 Bologna (IT)
(72) Inventor: CASSANI, Luca, 31030 CASTELCUCCO TV (IT)
(74) Representative: Modiano, Micaela Nadia

(56) References cited:
- WO-A1-2016/094499
- CN-U- 204 264 341
- DE-U1- 20 308 872
- KR-B1- 101 957 329
- US-A- 5 988 740
- US-A- 619 204
- US-A- 872 124
- US-A1- 2003 038 515
- US-B1- 6 290 291

## Description

The present invention relates to a saddle particularly suitable for installation on bicycles of any type.

In the practice of cycling, but also during the use of the bicycle as means of transport or as leisure tool, the user discharges most of his weight onto the saddle, the shape and dimensions of which therefore play a fundamental role in comfort of use.

It is known to use saddles that can slightly modify their shape by virtue of the presence of adjustment elements: this type of saddle allows the user to effectively adjust the saddle to their own requirements and their own anatomical shape. For example a saddle according to the preamble of claim 1 is shown in the document US 872,124.

All the technical solutions of the known type, however, do not allow completely stable adjustments and have structural limitations when used in extreme configurations.

In some cases, once an extreme configuration has been reached it is no longer possible to revert due to an unwanted jamming of the adjustment assembly.

The aim of the present invention is to solve the problems described above, proposing a saddle that allows stable dimensional and shape adjustments.

Within this aim, an object of the present invention is to propose a saddle which will not jam or be damaged even if brought to extreme adjustment configurations.

Another object of the present invention is to propose a saddle suitable for any type of bicycle.

Another object of the present invention is to provide a saddle which has low costs, is relatively simple to provide and of secure application.

In accordance with the invention, there is provided a saddle as defined in the appended claims.

Further characteristics and advantages of the invention will become more apparent from the description of a preferred but not exclusive embodiment of the saddle according to the invention, illustrated by way of non-limiting example in the accompanying drawings, wherein:

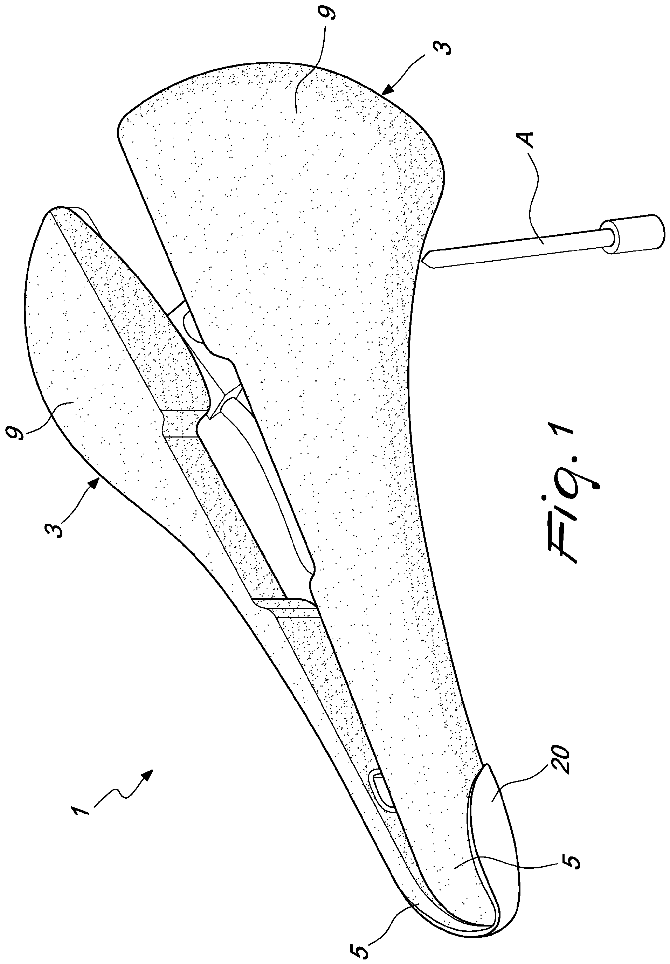

Figure 1 is a schematic perspective view of a saddle useful for understanding the invention and of a respective adjustment tool;

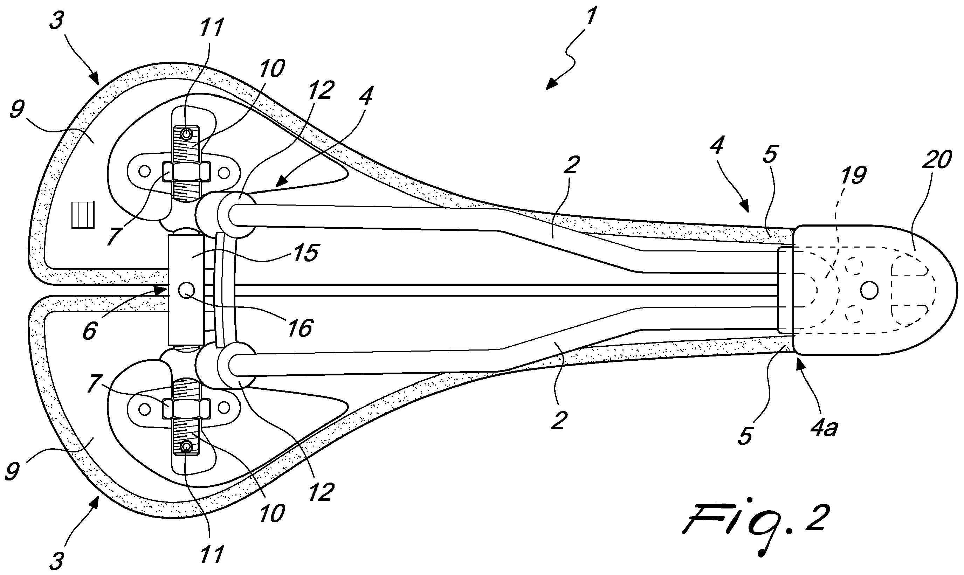

Figure 2 is a schematic bottom view of the saddle of Figure 1 in a first configuration;

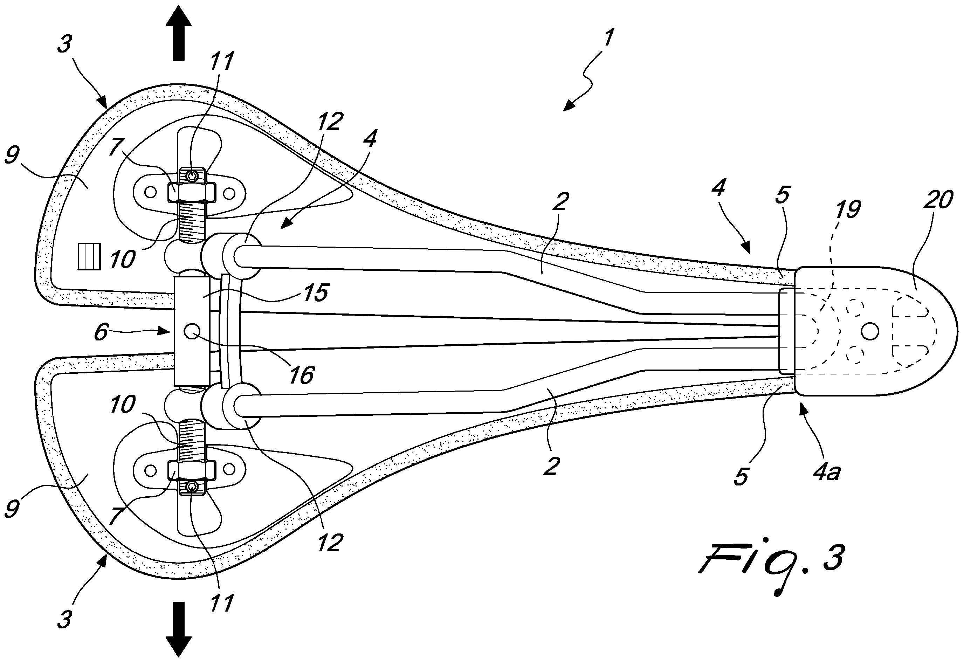

Figure 3 is a schematic bottom view of the saddle of Figure 1 in a second configuration;

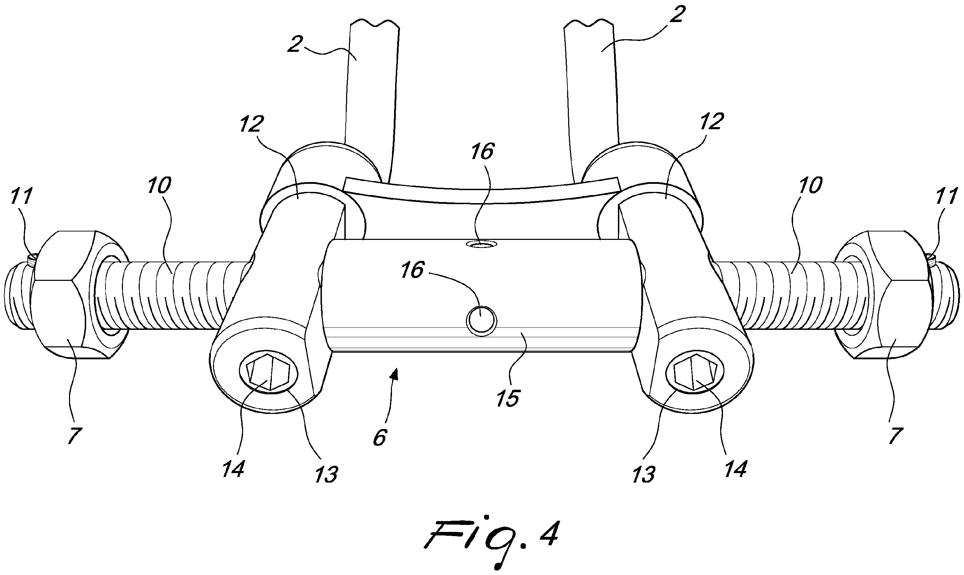

Figure 4 is a schematic perspective view of the frame and of a respective adjustment bar of the saddle of Figure 1;

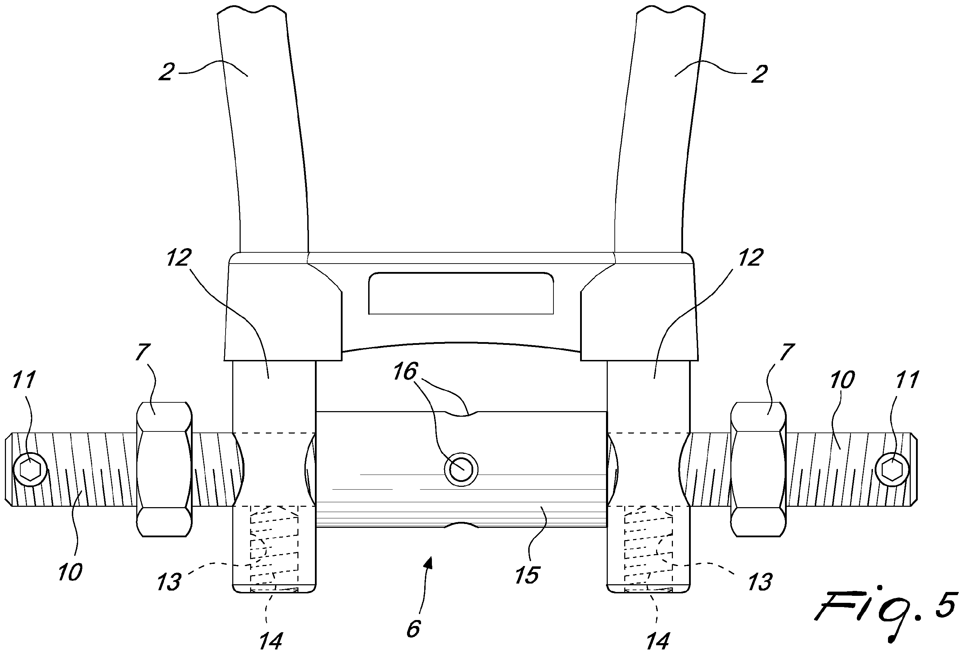

Figure 5 is a bottom perspective view of the frame and of the respective bar of Figure 4;
Figure 6 is a schematic bottom view of a saddle useful for understanding the invention in a first configuration;
Figure 7 is a schematic bottom view of the saddle of Figure 6 in a second configuration;
Figure 8 is a schematic bottom view of a saddle useful for understanding the invention;
Figure 9 is a schematic bottom view of the saddle according to the invention.

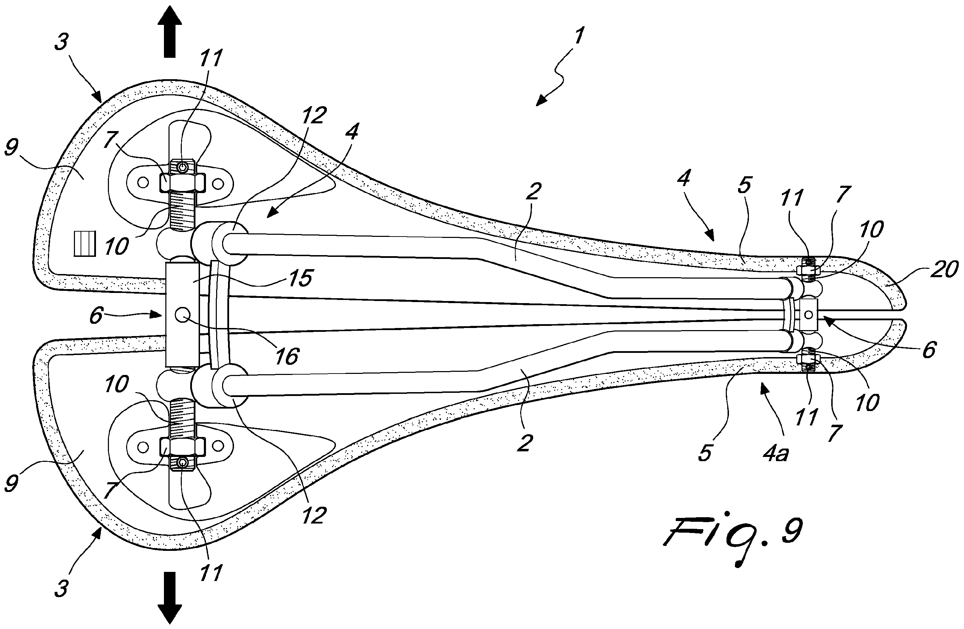

With particular reference to the Fig. 9, a saddle according to the invention is generally designated by the reference numeral 1.

The saddle 1 according to the invention comprises a main frame 2 for supporting a pair of symmetrical and mutually opposite wings 3.

The frame 2 comprises a member 4 for the mutual fixing of the wings 3 which is provided with two transverse supporting bars 6 each for a pair of sliders 7, 8.

Each slider 7, 8 is coupled to front end 5 and the rear end 9 of a respective wing 3.

The sliders 7, 8 are movable along the bar 6 according to a predefined stroke, for the adjustment of the distance of each end, at the front one 5 and the rear one 9, from the longitudinal central plane of symmetry of the frame 2.

Each slider 7 or 8 is coupled to a front end 5 and a rear end 9 of a respective wing 3.

The sliders 7 or 8 are movable along the bar 6 according to a predefined stroke: more specifically, the sliders 7 or 8 are movable along a predefined portion of the bar 6 with respect to extreme configurations (of maximum mutual proximity and maximum mutual distance of the front ends 5 or rear ends 9 of the wings 3), for the adjustment of the distance of each front end 5 and rear end 9 from the longitudinal central plane of symmetry of the frame 2.

In the saddle 1 according to the invention it is therefore possible to make an adjustment of the mutual distance of the wings 3, keeping them parallel or mutually inclined (in a symmetric or asymmetric manner, according to the specific requirements).

With particular reference to a constructive solution of unquestionable interest in practice and in application, the transverse supporting bar 6 is advantageously constituted by a threaded bar 10 and each slider 7 is usefully constituted by a nut with a thread that is complementary to the one of the threaded bar 10.

The threaded bar 10, in this case, advantageously comprises, at least at its terminal ends, protruding stroke limiting elements 11.

The protruding stroke limiting elements 11 prevent the nut (slider 7) from reaching the end of the threaded bar 10 and leaving it.

In other words, these elements 11 ensure that the two sliders 7 always remain correctly engaged on the bar 10, being able to translate along the bar 10 only according to a stroke of a predefined extent (comprised between a configuration of mutual resting contact of the ends 5 and 9, which corresponds to their maximum proximity, and a configuration of abutment of the slider nut 7 on the element 11, which corresponds to the maximum mutual distance of the ends 5 and 9).

With reference to the constructive solution described earlier, it is specified that the protruding stroke limiting elements 11 may advantageously be of the type chosen preferably from pins accommodated within transverse through holes of the ends of the threaded bar 10, grub screws engaged within transverse holes of the ends of the threaded bar 10, screws engaged within transverse holes of the ends of the threaded bar 10, cotter pins accommodated within transverse through holes of the ends of the threaded bar 10, stop rings (of the type of those known as snap rings) accommodated within respective slots of the ends of the threaded bar 10, terminal nuts rigidly coupled to respective ends of the threaded bar 10.

In general, any protruding stroke limiting element 11 is suitable to achieve the aim described previously and therefore various constructive solutions are not excluded (including the plastic deformation of the ends themselves of the threaded bar 10).

Furthermore, it is specified that the frame 2 conveniently comprises respective seats 12 for the rotatable accommodation of the threaded bar 10.

Each seat 12 is in turn provided with means for the stable locking of the bar 10.

In particular, the stable locking means may advantageously comprise a threaded transverse hole 13 and a locking screw 14 which can be tightened in the hole.

When the screw 14 is tightened in the hole 13, its terminal end abuts and is forced against the external surface of the threaded bar 10, so as to cause its locking. This locking operation can be performed after the adjusting of the mutual distance of the front ends 5 or rear ends 9 of the wings 3, by imposing rotations of the threaded bar 10, by acting on its central portion 15.

The central portion 15 of the bar 10 in fact comprises at least one recess 16 within which it is possible to insert a tool A with which to adjust (i.e., with which to turn the threaded bar 10 until the front ends 5 or rear ends 9 of the wings 3 are arranged at a mutual distance that complies with one's own requirements).

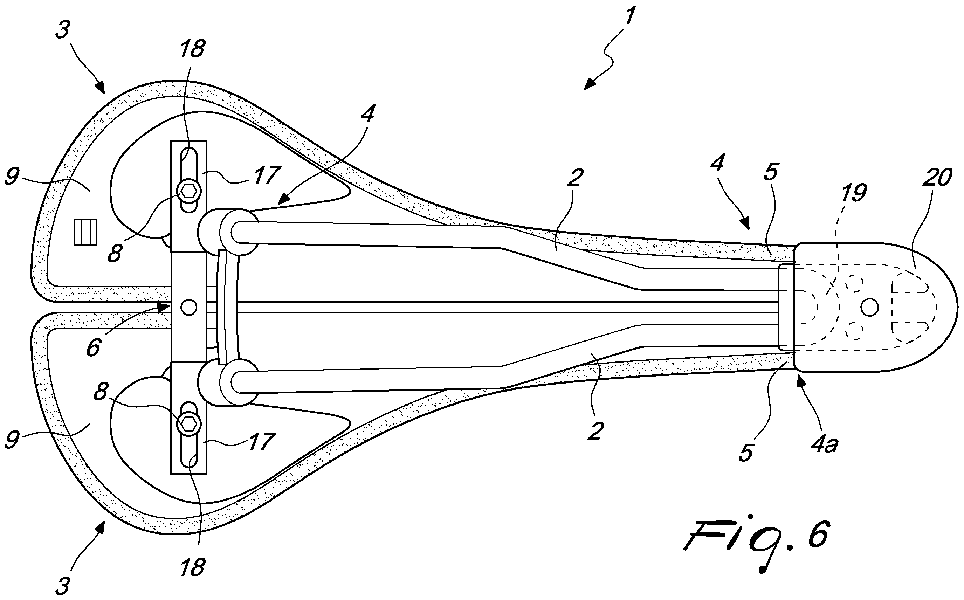

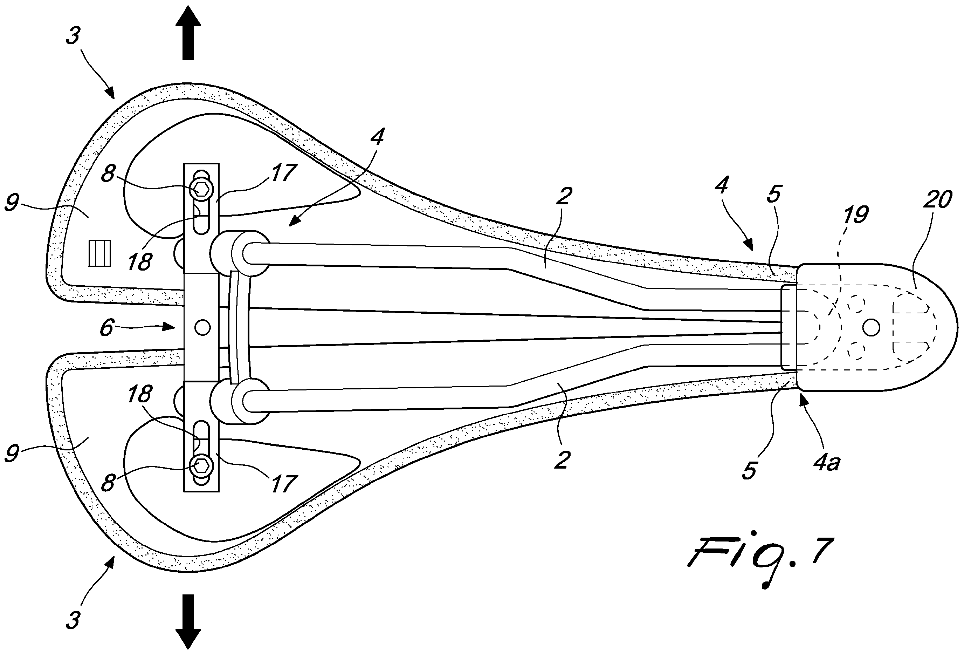

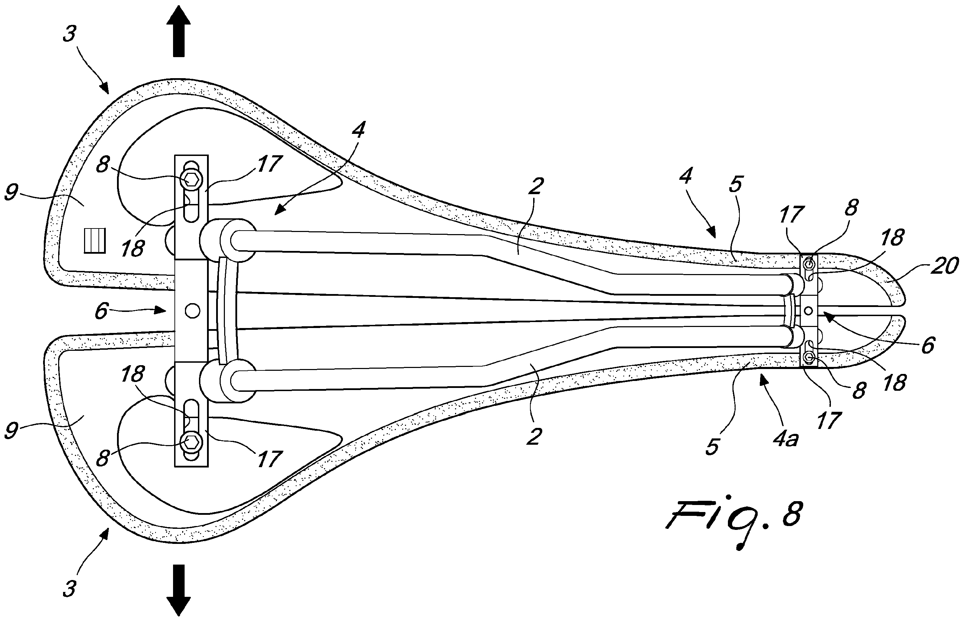

With particular reference to Figs. 6-8 not forming part of the invention as defined in the appended claims, a transverse supporting bar 6 is constituted by a rigid rod 17 provided with a pair of slots 18 which are symmetrical with respect to its central plane.

In this case, a pair of sliders 8 are each constituted by a threaded member.

The front end 5 or rear end 9 of each wing 3 comprises a receptacle with a thread that is complementary to the thread of the threaded member (slider 8) for the fastening of said threaded member (slider 8) on said receptacle, with consequent clamping of the rigid rod 17 between the threaded member (slider 8) and the front end 5 or rear end 9 of the wing 3.

It is specified that in this case each threaded member (slider 8) may be conveniently fastened on the receptacle of the front end 5 or rear end 9 of the wing 3 at any position along the respective slot 18 of the rod 17 in a manner that is independent of the other threaded member (the other slider 8).

Therefore, in practice, within the scope of the constructive solution described herein, the front ends 5 or rear ends 9 of the wings 3 can be coupled rigidly to the rod 17 according to any configuration, even non-symmetrical ones.

Therefore, this embodiment gives assurance to the user that the saddle 1 is shaped even in a non-symmetrical manner, thus compensating for problems arising from specific requirements or skeletal-postural problems of said user.

It is specified that the threaded member (slider 8) may advantageously comprise a terminal head provided with actuation portions chosen from manual ones, of the type of rings, flaps, levers and the like, and for tools, of the type of contoured seats, contoured external surfaces, and the like.

In practice, by using threaded members (sliders 8) that have an end ring or a so-called "butterfly" terminal or a transverse lever, the user can adjust at will the position of each front end 5 or rear end 9 along the rod 17 (within the stroke allowed by the respective slot 18), without the need to have any tools.

If the threaded members (sliders 8) have a hexagonal (or contoured) terminal head, the user may perform the adjustment by using a suitable wrench or pliers; if the terminal head has a contoured cavity, the user may use screwdrivers, contoured wrenches (such as Allen wrenches, Torx wrenches, spline wrenches and the like) and other tools of this type to adjust the position of the ends 9 of the wings 3.

It is specified that the fixing member 4 may advantageously comprise a connecting element 4a for the coupling of the front ends 5 or rear ends 9 of the wings 3 in a mutually adjacent configuration (or, in general, in a fixed mutual position).

Such connecting element 4a may conveniently comprise a tip 19 which is integral with the frame 2 and is designed to be accommodated within mutually opposite receptacles of the wings 3.

Each receptacle has a shape and dimensions which are substantially complementary to those of one half of the tip 19.

In the examples shown in the accompanying figures, the tip 19 may be constituted by a metallic stem, which is integral with the frame 2 and is U-shaped: the front ends 5 of the wings 3 are partially retained by a terminal 20 which also has an internal contoured portion suitable for the stable accommodation of the tip 19.

Obviously, the connecting element 4a may be arranged likewise between the rear ends 9, if one wishes to provide a configuration in which said rear ends 9 of the wings are fixed, while the mutual distance between the front ends 5 is adjustable.

In general, the saddle 1 according to the invention allows an adjustment of the mutual distance of the front ends 5 and of the rear ends 9.

These adjustments may allow mutual arrangements of the wings 3 in a symmetrical or asymmetric manner, as a function of the specific requirements of the user.

Finally, it is specified that the wings 3 may conveniently be made of a material preferably chosen from metals, polymers, composite materials, wood and combinations thereof.

The use of these materials ensures that the wings 3 are elastically deformable, being therefore more comfortable for the user.

Advantageously, the present invention solves the problems described earlier, proposing a saddle 1 that allows stable dimensional and shape adjustments.

Stability is ensured by the fact that the predetermined stroke along which the rear ends 9 of the wings 3 can mutually move ensures that the sliders 7 or 8 never reach extreme positions that might cause malfunctions.

Positively, the saddle 1 according to the invention does not suffer jamming or damage even when brought to extreme adjustment configurations: these extreme adjustment configurations remain in any case within the predetermined maximum stroke within which the saddle 1 is safely adjustable.

Usefully, the saddle 1 is suitable to be installed on any type of bicycle.

Validly, the saddle 1 is relatively simple to provide in practice and has low costs: these characteristics make the saddle 1 according to the invention an innovation of secure application.

The invention thus conceived is susceptible of numerous modifications and variations, all of which are within the scope of the appended claims.

In the exemplary embodiments shown, individual characteristics, given in relation to specific examples, may actually be interchanged with other different characteristics that exist in other exemplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A saddle (1) of the type comprising a main frame (2) for supporting a pair of symmetrical and mutually opposite wings (3), said frame (2) comprising a member (4) for the mutual fixing of said wings (3) which is provided with two transverse supporting bars (6) each for a pair of sliders (7, 8), each slider (7, 8) being coupled to a front end (5) and a rear end (9) of a respective wing (3), said sliders (7, 8) being movable along a respective said bar (6) at said front end (5) and at said rear end (9) according to a predefined stroke, for an adjustment of a distance of each said front and rear end (5, 9) from a longitudinal central plane of symmetry of said frame (2), so as to make it possible to make an adjustment of the mutual distance of said wings (3), keeping them parallel or mutually inclined, in a symmetric or asymmetric manner, according to the specific requirements, **characterised by** said transverse supporting bar (6) being a threaded bar (10) and each said slider (7) is a nut with a complementary thread, said bar (6) comprising, at least at its terminal ends, protruding stroke limiting elements (11).

2. The saddle according to claim 1, **characterized in that** said protruding stroke limiting elements (11) are of the type chosen preferably from pins accommodated within transverse through holes of said ends of said threaded bar (10), grub screws engaged within transverse holes of said ends of said threaded bar (10), screws engaged within transverse holes of said ends of said threaded bar (10), cotter pins accommodated within transverse through holes of said ends of said threaded bar (10), stop rings accommodated within respective slots of said ends of said threaded bar (10), terminal nuts rigidly coupled to respective ends of said threaded bar (10).

3. The saddle according to claim 2, **characterized in that** said frame (2) comprises respective seats (12) for the rotatable accommodation of said threaded bar (10), each seat (12) comprising means for the stable locking of said bar (10).

4. The saddle according to claim 3, **characterized in that** said stable locking means comprise a threaded transverse hole (13) and a locking screw (14) which can be fastened in said hole (13) for the abutment and forcing of its terminal end on the external surface of said threaded bar (10).

5. The saddle according to one or more of the preceding claims, **characterized in that** said wings (3) are made of material preferably chosen from metals, polymers, composite materials, wood and combinations thereof, said wings (3) being elastically deformable.

## Patentansprüche

1. Ein Sattel (1) von dem Typ, der einen Hauptrahmen (2) zum Tragen eines Paares symmetrischer, einander gegenüberliegender Flügel (3) umfasst; wobei der Rahmen (2) ein Glied (4) zur Befestigung der Flügel (3) aneinander umfasst, welches mit zwei transversalen tragenden Stangen (6), jeweils für ein Paar von Schiebern (7, 8), ausgestattet ist, wobei jeder Schieber (7, 8) mit einem vorderen Ende (5) und einem hinteren Ende (9) eines jeweiligen Flügels (3) gekoppelt ist; wobei die Schieber (7, 8) entlang der jeweiligen Stange (6) an dem vorderen Ende (5) und an dem hinteren Ende (9) über einen vordefinierten Hub beweglich sind zur Anpassung eines Abstands sowohl des vorderen als auch des hinteren Endes (5, 9) von einer zentralen LängsSymmetrieebene des Rahmens (2), um so eine Anpassung des Abstands der Flügel (3) voneinander zu ermöglichen und sie dabei, auf symmetrische oder asymmetrische Weise, je nach den spezifischen Erfordernissen, parallel oder schräg zueinander zu halten; **dadurch gekennzeichnet, dass** die tragende Stange (6) eine Gewindestange (10) ist und jeder Schieber (7) eine Mutter mit Komplementärgewinde ist, wobei die Stange (6) zumindest an ihren terminalen Enden vorstehende Hubbegrenzungselemente (11) umfasst.

2. Der Sattel gemäß Anspruch 1, **dadurch gekennzeichnet, dass** die vorstehenden Hubbegrenzungselemente (11) von dem Typ sind, der vorzugsweise gewählt ist aus Stiften, die in transversalen Durchgangslöchern der Enden der Gewindestange (10) untergebracht sind, Gewindestiften, die in transversale Löcher der Enden der Gewindestange (10) eingreifen, Schrauben, die in transversale Löcher der Enden der Gewindestange (10) eingreifen, Splinten, die in transversale Durchgangslöcher der Enden der Gewindestange (10) aufgenommen sind, Anschlagringen, die in entsprechende Schlitze der Enden der Gewindestange (10) aufgenommen sind, Abschlussmuttern, die starr mit entsprechenden Enden der Gewindestange (10) gekoppelt sind.

3. Der Sattel gemäß Anspruch 2, **dadurch gekennzeichnet, dass** der Rahmen (2) entsprechende Sitze (12) für die drehbare Aufnahme der Gewindestange (10) umfasst, wobei jeder Sitz (12) Mittel für die feste Verriegelung der Stange (10) umfasst.

4. Der Sattel gemäß Anspruch 3, **dadurch gekennzeichnet, dass** die Mittel zur festen Verriegelung ein transversales Gewindeloch (13) und eine Sicherungsschraube (14) umfassen, die zum Widerlager und zum Pressen ihres terminalen Endes auf die äußere Oberfläche der Gewindestange (10) in dem Loch (13) befestigt werden kann.

5. Der Sattel gemäß einem oder mehreren der obigen Ansprüche, **dadurch gekennzeichnet, dass** die Flügel (3) aus einem Material bestehen, das vorzugsweise gewählt ist aus Metallen, Polymeren, Verbundmaterialien, Holz und Kombinationen davon, wobei die Flügel (3) elastisch verformbar sind.

## Revendications

1. Selle (1) du type comprenant un cadre principal (2) destiné à supporter une paire d'ailes symétriques et mutuellement opposées (3), ledit cadre (2) comprenant un organe (4) pour la fixation mutuelle desdites ailes (3) qui est pourvu de deux barres de support transversales (6), chacune pour une paire de curseurs (7, 8), chaque curseur (7, 8) étant accouplé à une extrémité avant (5) et une extrémité arrière (9) d'une aile respective (3), lesdits curseurs (7, 8) étant mobiles le long d'une dite barre respective (6) à ladite extrémité avant (5) et à ladite extrémité arrière (9) selon une course prédéfinie, pour un réglage d'une distance de chacune desdites extrémités avant et arrière (5, 9) par rapport à un plan de symétrie central longitudinal dudit cadre (2), afin de permettre la réalisation d'un réglage de la distance mutuelle desdites ailes (3), en les maintenant parallèles ou mutuellement inclinées, de façon symétrique ou asymétrique, suivant les besoins particuliers, **caractérisée en ce que** ladite barre de support transversale (6) est une barre filetée (10) et chacun desdits curseurs (7) est un écrou ayant un filetage complémentaire, ladite barre (6) comprenant, au moins à ses extrémités terminales, des éléments de limitation de course saillants (11).

2. Selle selon la revendication 1, **caractérisée en ce que** lesdits éléments de limitation de course saillants (11) sont d'un type choisi de préférence parmi des goupilles logées dans des trous débouchants transversaux desdites extrémités de ladite barre filetée (10), des vis de retenue engagées dans des trous transversaux desdites extrémités de ladite barre filetée (10), des vis engagées dans des trous transversaux desdites extrémités de ladite barre filetée (10), des goupilles fendues logées dans des trous débouchants transversaux desdites extrémités de ladite barre filetée (10), des bagues d'arrêt logées dans des fentes respectives desdites extrémités de ladite barre filetée (10), et des écrous terminaux accouplés de manière rigide aux extrémités respectives de ladite barre filetée (10).

3. Selle selon la revendication 2, **caractérisée en ce que** ledit cadre (2) comprend des sièges respectifs (12) destinés à recevoir à rotation ladite barre filetée (10), chaque siège (12) comprenant un moyen permettant le blocage stable de ladite barre (10).

4. Selle selon la revendication 3, **caractérisée en ce que** ledit moyen de blocage stable comprend un trou transversal fileté (13) et une vis de blocage (14) qui peut être fixée dans ledit trou (13) pour la mise en butée et l'appui de son extrémité terminale sur la surface extérieure de ladite barre filetée (10).

5. Selle selon l'une ou plusieurs des revendications précédentes, **caractérisée en ce que** lesdites ailes (3) sont faites d'un matériau choisi de préférence parmi les métaux, les polymères, les matériaux composites, le bois et leurs combinaisons, lesdites ailes (3) étant déformables de façon élastique.
